# EUROPEAN PATENT APPLICATION

(11) **EP 4 769 707 A1**
(43) Date of publication of application: **01.07.2026**
(21) Application number: 25209167.3
(22) Date of filing: 16.10.2025
(51) Int. Cl.: H01M 50/209, H01M 50/507, H01M 50/588

(54) **BATTERY MODULE**

(30) Priority: 24.12.2024 KR 20240195724
(71) Applicant: SAMSUNG SDI CO., LTD., Yongin-si, Gyeonggi-do 17084 (KR)
(72) Inventor: CHO, Man Sik, 16678 Suwon-si (KR); KIM, Yoon Sung, 16678 Suwon-si (KR)
(74) Representative: Marks & Clerk LLP

(57) **Abstract**

A battery module includes a housing, a plurality of battery cells arranged in the housing along a first direction, a plurality of cell bus bars connected to the battery cells, a holder arranged on the battery cells and supporting the cell bus bars, a module bus bar including an extending portion connected to the cell bus bars and arranged on the holder, and an adhesive member fixing the extending portion to the holder.

## Description

### BACKGROUND

### 1. Field

Aspects of embodiments of the present disclosure relate to a battery module.

### 2. Description of the Related Art

In general, due to the recent proliferation of electronic devices using batteries, such as mobile phones, notebook computers, and electric vehicles, the demand for secondary batteries having high energy density and high capacity has rapidly increased. Accordingly, research and development for improving the performance of a lithium secondary battery are being actively conducted.

A lithium secondary battery is a battery including a positive electrode and a negative electrode including an active material capable of intercalating and deintercalating lithium ions, and an electrolyte solution, which generates energy through oxidation/reduction reactions when lithium ions are intercalated/deintercalated at the positive and negative electrodes.

Lithium secondary batteries can be used in the form of a battery pack including a plurality of battery cells connected in series and/or parallel and a battery management system (BMS) that controls charging and discharging of the plurality of battery cells.

The above-described information disclosed in the technology that forms the background of the present disclosure is provided to improve understanding of the background of the present disclosure, and thus may include information that does not constitute the related art.

### SUMMARY

According to an aspect of embodiments of the present disclosure a battery module capable of strengthening a fixing force to a module bus bar is provided.

The above and other aspects and features of the present disclosure will be described in or will be apparent from the following description of some embodiments of the present disclosure.

According to one or more embodiments of the present disclosure, a battery module includes: a housing; a plurality of battery cells arranged in the housing along a first direction; a plurality of cell bus bars connected to the battery cells; a holder arranged on the battery cells and supporting the cell bus bars; a module bus bar including an extending portion connected to the cell bus bars and arranged on the holder, and an adhesive member fixing the extending portion to the holder.

The extending portion may be arranged parallel to the first direction.

The adhesive member may include a first adhesive member between the holder and the extending portion.

The holder may include a holder adhesive hole between the battery cell and the extending portion, and the adhesive member may further include: a second adhesive member between the battery cell and the holder; and a connecting portion in the holder adhesive hole and connected to the first adhesive member and the second adhesive member.

The first adhesive member may be configured to be introduced between the holder and the extending portion through the holder adhesive hole as the holder is pressed toward the battery cell.

A cross-sectional area of the first adhesive member may be larger than a cross-sectional area of the connecting portion.

The holder adhesive hole may include a plurality of holder adhesive holes spaced apart from each other between the battery cells and the module bus bars.

A battery cell of the plurality of battery cells may include: a vent facing the holder; and a terminal spaced apart from the vent and connected to a cell bus bar of the plurality of cell bus bars, and the second adhesive member may be between the vent and the terminal.

The holder may further include: a first holder surface facing the battery cell; a second holder surface opposite to the first holder surface; and a groove spaced apart from the holder adhesive hole and concavely formed from the first holder surface toward the second holder surface.

The vent and the terminal may be spaced apart along a second direction intersecting the first direction, and the groove may include a first groove and a second groove spaced apart along the second direction and respectively located on opposite sides of the holder adhesive hole.

An interval between the first groove and the second groove may be smaller than an interval between the terminal and the vent.

The first groove and the second groove may pass through the second holder surface and an interval between the first groove and the second groove may be smaller than a width of the extending portion parallel to the second direction.

The module bus bar may include a bus bar adhesive hole passing through the extending portion, and the adhesive member may further include a third adhesive member extending from the first adhesive member and located in the bus bar adhesive hole.

The bus bar adhesive hole may include a plurality of bus bar adhesive holes spaced apart from each other in the extending portion.

The bus bar adhesive hole may be offset from the holder adhesive hole.

The extending portion may include a first surface facing the holder and a second surface opposite to the first surface, the bus bar adhesive hole may include: a first through portion passing through the first surface; and a second through portion passing through the second surface and connected to the first through portion, and a cross-sectional area of the second through portion may be larger than a cross-sectional area of the first through portion.

The bus bar adhesive hole may be concavely formed from a side surface of the extending portion.

The battery module may further include a rib extending from the holder and facing the side surface of the extending portion.

The rib may be in contact with the side surface of the extending portion.

At least some of the above and other features of the invention are set out in the claims.

### BRIEF DESCRIPTION OF THE DRAWINGS

The drawings included with this specification illustrate some embodiments of the present disclosure, and further describe aspects and features of the present disclosure together with the detailed description of the present disclosure. However, the present disclosure is not to be construed as being limited to the drawings.
FIG. 1 is a perspective view schematically showing a configuration of a battery module according to an embodiment of the present disclosure;
FIG. 2 is an exploded perspective view schematically showing the configuration of the battery module of FIG. 1;
FIG. 3 is a perspective view schematically showing a configuration of a battery cell according to an embodiment of the present disclosure;
FIG. 4 is a cross-sectional view schematically showing the configuration of the battery cell of FIG. 3;
FIG. 5 is a view schematically showing a configuration of an electrode assembly according to an embodiment of the present disclosure;
FIG. 6 is a view schematically showing a configuration of an adhesive member according to an embodiment of the present disclosure;
FIG. 7 is a cross-sectional view schematically showing a configuration of a battery module according to another embodiment of the present disclosure;
FIG. 8 is an exploded perspective view schematically showing the configuration of the battery module of FIG. 7;
FIGS. 9 to 11 are views schematically showing a process of forming an adhesive member of the battery module of FIG. 7;
FIG. 12 is a cross-sectional view schematically showing a configuration of a battery module according to another embodiment of the present disclosure;
FIGS. 13 to 15 are views schematically showing a process of forming an adhesive member of the battery module of FIG. 12;
FIG. 16 is a perspective view schematically showing a configuration of a battery module according to another embodiment of the present disclosure;
FIG. 17 is an exploded perspective view schematically showing the configuration of the battery module of FIG. 16;
FIG. 18 is a cross-sectional view schematically showing the configuration of the battery module of FIG. 16;
FIG. 19 is an enlarged view schematically showing a configuration of a bus bar adhesive hole of the battery module of FIG. 16;
FIGS. 20 and 21 are views schematically showing a process of forming a third adhesive member of the battery module of FIG. 16;
FIG. 22 is a perspective view schematically showing a configuration of a battery module according to another embodiment of the present disclosure;
FIG. 23 is an exploded perspective view schematically showing the configuration of the battery module of FIG. 22;
FIG. 24 is a cross-sectional view schematically showing the configuration of the battery module of FIG. 22;
FIG. 25 is an enlarged view schematically showing a configuration of a rib of the battery module of FIG. 22; and
FIGS. 26 and 27 are views schematically showing a process of forming a third adhesive member of the battery module of FIG. 22.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

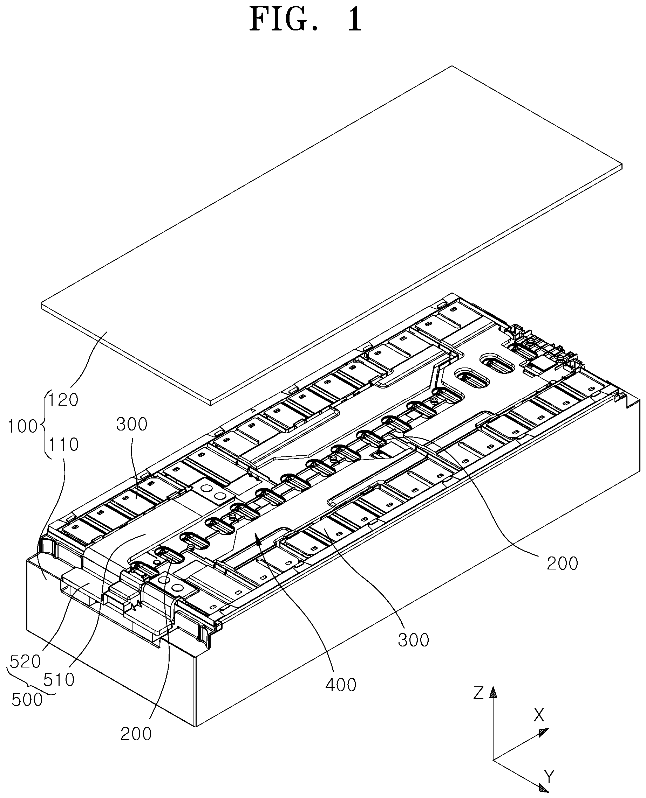

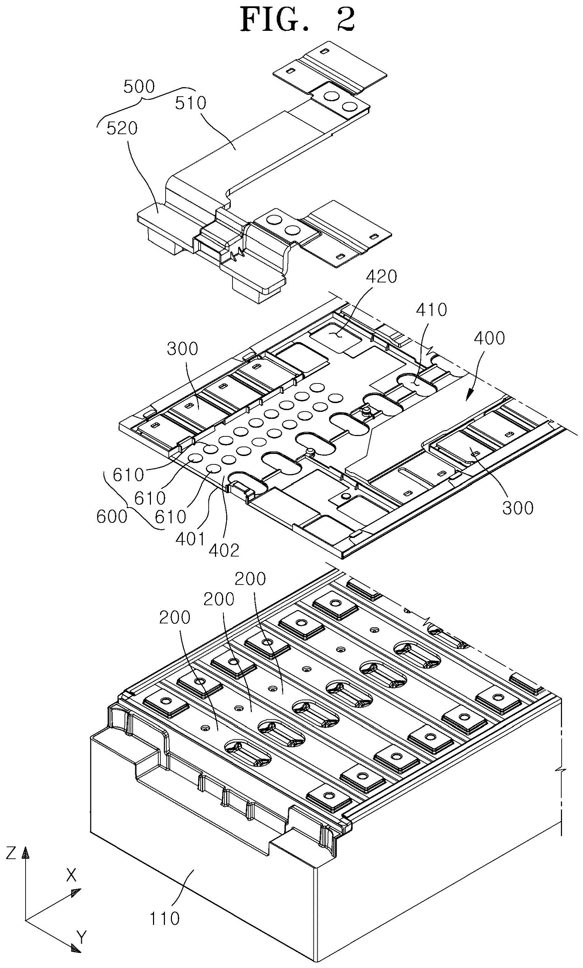

FIG. 1 is a perspective view schematically showing a configuration of a battery module according to an embodiment of the present disclosure; and FIG. 2 is an exploded perspective view schematically showing the configuration of the battery module of FIG. 1.

Referring to FIGS. 1 and 2, a battery module according to an embodiment may include a housing 100, a battery cell 200, a cell bus bar 300, a holder 400, a module bus bar 500, and an adhesive member 600.

The housing 100 may form a general exterior of the battery module and provide a space in which the battery cell 200 may be accommodated. The housing 100 may protect the battery cell 200 from an external impact and foreign substances.

The housing 100 may include a housing body 110.

The housing body 110 may be formed to have a shape of a box with an empty interior and an open side. For example, the open side of the housing body 110 may be disposed perpendicular to a third direction (e.g., a Z direction) with respect to FIG. 1 and may face upward. However, a cross-sectional shape of the housing body 110 is not limited to the shape shown in FIG. 1 and may have any of various shapes, such as a polygonal shape, a circular shape, an oval shape, and the like.

The housing 100 according to an embodiment may further include a housing cover 120.

The housing cover 120 may be coupled to the housing body 110 and may close an inner space of the housing body 110. For example, the housing cover 120 may be formed to have a generally plate shape. The housing cover 120 may be disposed to face an upper side surface of the housing body 110 along the third direction. The housing cover 120 may be fixed to an upper end portion of the housing body 110 by any of various types of coupling methods, such as bolting, welding, fitting, and the like.

The battery cell 200 may function as a unit structure which stores and supplies power in the battery module. A plurality of battery cells 200 may be provided. The plurality of battery cells 200 may be arranged along a first direction (e.g., an X direction). However, the arrangement of the plurality of battery cells 200 is not limited thereto, and the plurality of battery cells 200 may be arranged in a plurality of rows along a second direction (e.g., a Y direction), or may be arranged in a plurality of rows along the first direction and the second direction.

Herein, an example in which the battery cell 200 is a prismatic battery as a lithium-ion secondary battery will be described. However, the present disclosure is not limited thereto, and the battery cell 200 may be a lithium polymer battery or a cylindrical battery, for example.

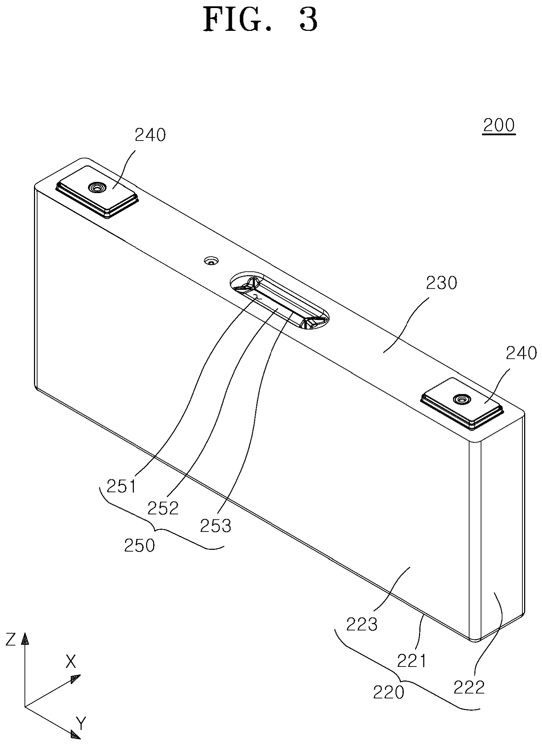

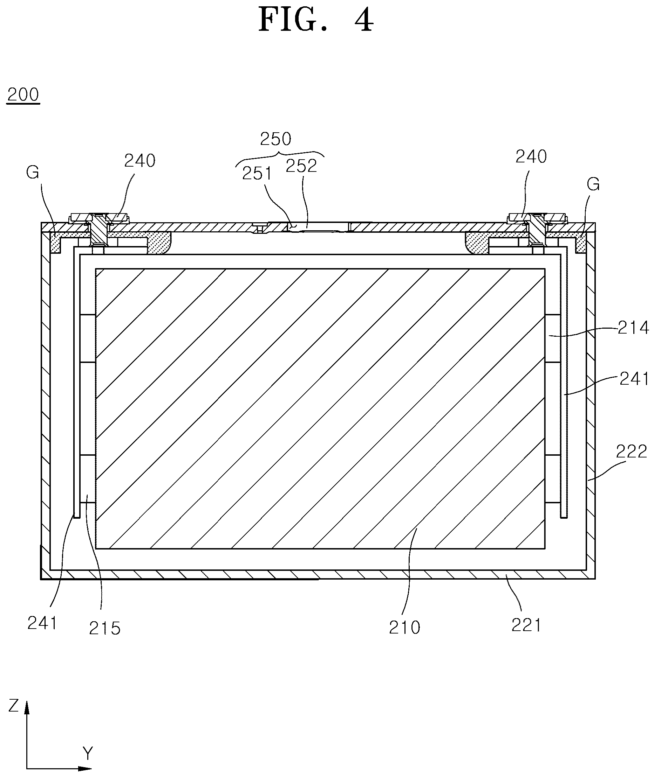

FIG. 3 is a perspective view schematically showing a configuration of the battery cell according to an embodiment of the present disclosure; and FIG. 4 is a cross-sectional view schematically showing the configuration of the battery cell of FIG. 3.

Referring to FIGS. 1 to 4, the battery cell 200 according to an embodiment includes an electrode assembly 210, a case 220, a cap plate 230, a terminal 240, and a vent 250.

The electrode assembly 210 may function as a unit structure which performs charging and discharging operations of power in the battery cell 200. The electrode assembly 210 may be accommodated in the case 220.

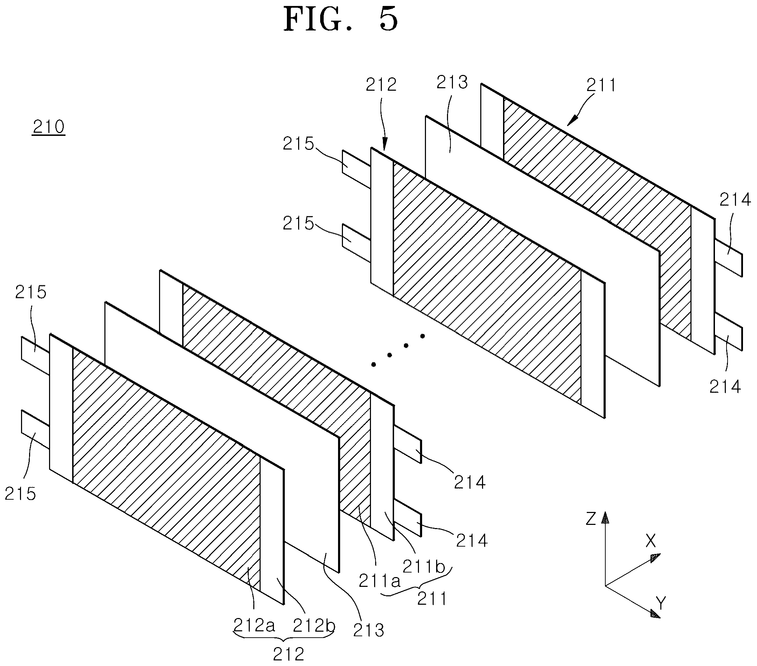

FIG. 5 is a view schematically showing a configuration of an electrode assembly according to an embodiment of the present disclosure.

Referring to FIGS. 1 to 5, the electrode assembly 210 according to an embodiment may include a first electrode 211, a second electrode 212, and a separator 213.

Herein, an example in which the electrode assembly 210 is formed as a stack type in which a plurality of first electrodes 211, a plurality of second electrodes 212, and a plurality of separators 213 are alternately stacked along the first direction will be described. However, the electrode assembly 210 is not limited thereto, and, for example, may be formed as a jelly roll type wound around a winding axis in a state in which the first electrodes 211, the second electrodes 212, and the separators 213 are sequentially stacked.

In an embodiment, the first electrode 211 may function as a positive electrode of the electrode assembly 210.

The first electrode 211 according to an embodiment may be formed to have a foil shape including a metal material, such as aluminum or an aluminum alloy. Both, or opposite, surfaces of the first electrode 211 may be disposed perpendicular to the first direction. A type, size, shape, or the like of the first electrode 211 is not particularly limited as long as it has conductivity and does not cause a chemical change in the secondary battery. A shape of the first electrode 211 may have any of various shapes in addition to the rectangular shape.

A plurality of first electrodes 211 may be provided. The plurality of first electrodes 211 may be arranged along the first direction. The number of first electrodes 211 may be varied depending on the charging capacity and the like of the battery cell 200.

The first electrode 211 may include a first active material layer 211a.

The first active material layer 211a may be provided in a form of being applied on at least a portion of the first electrode 211. The first active material layer 211a may be applied on both, or opposite, surfaces of the first electrode 211 or may be applied on only one surface of the first electrode 211.

In an embodiment, the first electrode 211 functions as a positive electrode, and the first active material layer 211a may include a positive electrode active material.

The positive electrode active material may be a compound capable of reversible intercalation and deintercalation of lithium (a lithiated intercalation compound). In an embodiment, as the positive electrode active material, one or more of composite oxides of a metal selected from the group consisting of cobalt, manganese, nickel, iron, and a combination thereof and lithium may be used.

As an example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0 < x < 1, 0 < y <1, 0 < z < 1, and x+y+z = 1 may be satisfied. The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM) or may include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM).

The first active material layer 211a may further include a positive electrode conductive material.

The positive electrode conductive material imparts conductivity to the first active material layer 211a, and any suitable electrically conductive material that does not cause a chemical change may be used. Examples of the positive electrode conductive material may include carbon-based materials, such as natural graphite, artificial graphite, carbon black, acetylene black, Ketjen black, carbon fibers, carbon nanofibers, and carbon nanotubes, metal-based materials in the form of a metal powder or metal fibers containing copper, nickel, aluminum, silver, and the like, conductive polymers, such as polyphenylene derivatives, or a mixture thereof.

The first active material layer 211a may further include a positive electrode binder.

The positive electrode binder functions to attach the particles constituting the positive electrode active material to each other well, and also attach the positive electrode active material to the first electrode 211 well.

Examples of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If the aqueous binder is used as the positive electrode binder, the aqueous binder may further include a cellulose series compound capable of imparting viscosity. As the cellulose series compound, one or more of carboxymethyl cellulose, hydroxypropylmethyl cellulose, methyl cellulose, and an alkali metal salt thereof may be mixed and used. In an embodiment, the alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The first electrode 211 may include a first uncoated portion 211b on which the first active material layer 211a is not applied. The first uncoated portion 211b according to an embodiment may be disposed at an end region of the first electrode 211 facing the second direction. However, the first uncoated portion 211b is not limited to this form and, in an embodiment, may be formed over an entire edge region of the first electrode 211.

In an embodiment, the second electrode 212 may function as a negative electrode of the electrode assembly 210.

The second electrode 212 according to an embodiment may be formed to have a foil shape including a metal material, such as copper, a copper alloy, nickel, or a nickel alloy. Both, or opposite, surfaces of the second electrode 212 may be disposed perpendicular to the first direction. A type, size, shape, or the like of the second electrode 212 is not specifically limited as long as it has conductivity and does not cause a chemical change in the secondary battery. A cross-sectional shape of the second electrode 212 may have any of various shapes in addition to the rectangular shape shown in FIG. 5.

A plurality of second electrodes 212 may be provided. The plurality of second electrodes 212 may be arranged along the first direction. The plurality of first electrodes 211 and second electrodes 212 may be alternately disposed along the first direction.

The second electrode 212 may include a second active material layer 212a and a second uncoated portion 212b.

The second active material layer 212a may be provided in a form of being applied on at least a portion of the second electrode 212. The second active material layer 212a may be applied on both, or opposite, surfaces of the second electrode 212, or may be applied on only one surface of the second electrode 212.

In an embodiment, the second electrode 212 functions as a negative electrode, and the second active material layer 212a may include a negative electrode active material.

The negative electrode active material may include a material capable of reversible intercalation/deintercalation of lithium ions, a lithium metal, a lithium metal alloy, a material capable of doping and dedoping of lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as amorphous, plate-like, flake-like, spherical, or fiber-like natural graphite or artificial graphite, and examples of the amorphous carbon may include soft carbon, hard carbon, mesophase pitch carbide, calcined coke, or the like.

As the lithium metal alloy, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedepoing of lithium, a Si-based negative electrode active material or a Sn-based negative electrode active material may be used. The Si-based negative electrode active material may be silicon, a silicon-carbon composite, SiOₓ (0 < x ≤ 2), a Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnOₓ(0 < x ≤ 2, e.g., SnO₂), a Sn-based alloy, or a combination thereof.

The silicon-carbon composite may be a composite of silicon and amorphous carbon. According to an embodiment, the silicon-carbon composite may be in the form of silicon particles and amorphous carbon coated on surfaces of the silicon particles. For example, the silicon-carbon composite may include a secondary particle (core) in which primary silicon particles are aggregated and an amorphous carbon coating layer (shell) located on a surface of the secondary particle. The amorphous carbon may be located between the primary silicon particles, for example, such that the primary silicon particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or Sn-based negative electrode active material may be used in combination with a carbon-based negative electrode active material.

The second active material layer 212a may further include a negative electrode conductive material and a negative electrode binder.

The negative electrode conductive material imparts conductivity to the second active material layer 212a, and any suitable electrically conductive material that does not cause a chemical change may be used. Examples of the negative electrode conductive material may include carbon-based materials, such as natural graphite, artificial graphite, carbon black, acetylene black, Ketjen black, carbon fibers, carbon nanofibers, and carbon nanotubes, metal-based materials in the form of a metal powder or metal fibers containing copper, nickel, aluminum, silver, or the like, conductive polymers, such as polyphenylene derivatives, or a mixture thereof.

The negative electrode binder functions to well attach particles constituting the negative electrode active material and also to well attach the negative electrode active material to the second electrode 212.

Examples of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If the aqueous binder is used as the negative electrode binder, the aqueous binder may further include a cellulose series compound capable of giving viscosity. As the cellulose series compound, one or more of carboxymethyl cellulose, hydroxypropylmethyl cellulose, methyl cellulose, and an alkali metal salt thereof may be mixed and used. In an embodiment, the alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The second electrode 212 may include a second uncoated portion 212b on which the second active material layer 212a is not applied. The second uncoated portion 212b according to an embodiment may be disposed at an end region of the second electrode 212. However, the second uncoated portion 212b is not limited to this form, and, in an embodiment, may be formed over an entire edge region of the second electrode 212.

The separator 213 may be disposed between the first electrode 211 and the second electrode 212. The separator 213 may prevent or substantially prevent a short circuit between the first electrode 211 and the second electrode 212 while allowing lithium ions to move between the first electrode 211 and the second electrode 212. In an embodiment, the separator 213 may be disposed to entirely surround a surface region of the electrode assembly 210. Accordingly, the separator 213 may prevent or substantially prevent the first electrode 211 and the second electrode 212 from being directly exposed to the outside of the electrode assembly 210.

The separator 213 may be made of polyethylene, polypropylene, polyvinylidene fluoride, or a multilayer film of two or more layers thereof, and a mixed multilayer film such as a two-layer separator of polyethylene/polypropylene, a three-layer separator of polyethylene/polypropylene/polyethylene, or a three-layer separator of polypropylene/polyethylene/polypropylene may be used.

The separator 213 may include a porous substrate and a coating layer including an organic material, an inorganic material, or a combination thereof, which is positioned on one surface or both, or opposite, surfaces of the porous substrate.

The porous substrate may be a polymer film made of one polymer selected from polyolefins, such as polyethylene and polypropylene, polyesters, such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more of the above materials.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)2, boehmite, and a combination thereof, but is not limited thereto.

The organic material and the inorganic material may be mixed in one coating layer or may be in the form of a coating layer including (or containing) an organic material and a coating layer including (or containing) an inorganic material which are stacked on each other.

The electrode assembly 210 according to an embodiment may further include a first tab 214 and a second tab 215.

The first tab 214 may be connected to the first electrode 211.

The first tab 214 according to an embodiment may have a foil shape extending from the first uncoated portion 211b of the first electrode 211 in a direction parallel to the second direction. The first tab 214 may have a generally rectangular shape. However, the shape of the first tab 214 is not limited thereto, and may have any of various shapes

In an embodiment, the first tab 214 may be formed integrally with the first electrode 211. For example, the first tab 214 may be a remaining region of the first uncoated portion 211b which remains after a partial region of the first uncoated portion 211b is cut or removed by notching processing or the like. In an embodiment, the first tab 214 may be manufactured separately from the first electrode 211 and then connected to the first uncoated portion 211b by welding or the like. In an embodiment, a material of the first tab 214 may be the same as a material of the first electrode 211.

A plurality of first tabs 214 may be provided. Each of the first tabs 214 may individually extend from the first uncoated portions 211b of different first electrodes 211. Neighboring first tabs 214 may be disposed to face each other along the first direction. That is, the plurality of first tabs 214 may be arranged along the first direction. The neighboring first tabs 214 may be disposed parallel to each other. The neighboring first tabs 214 may be in contact with each other and may also be spaced apart from each other by a thickness of the separator 213.

The plurality of first tabs 214 may be provided on each first electrode 211. For example, a pair of first tabs 214 may be formed on each first electrode 211. The pair of first tabs 214 formed on each first electrode 211 may be arranged along the third direction.

The second tab 215 may be connected to the second electrode 212.

The second tab 215 according to an embodiment may have a foil shape extending from the second uncoated portion 212b of the second electrode 212 in a direction parallel to the second direction. Extending directions of the first tab 214 and the second tab 215 may be opposite to each other. The second tab 215 may have a generally rectangular shape. However, the shape of the second tab 215 is not limited thereto, and may have any of various shapes.

In an embodiment, the second tab 215 may be formed integrally with the second electrode 212. For example, the second tab 215 may be a remaining region of the second uncoated portion 212b which remains after a partial region of the second uncoated portion 212b is cut or removed by notching processing or the like. In an embodiment, the second tab 215 may be manufactured separately from the second electrode 212 and then connected to the second uncoated portion 212b by welding or the like. In an embodiment, a material of the second tab 215 may be the same as a material of the second electrode 212.

A plurality of second tabs 215 may be provided. Each of the second tabs 215 may individually extend from the second uncoated portions 212b of different second electrodes 212. Neighboring second tabs 215 may be disposed to face each other along the first direction. That is, the plurality of second tabs 215 may be arranged along the first direction. The neighboring second tabs 215 may be disposed parallel to each other. The neighboring second tabs 215 may be in contact with each other and may also be spaced apart from each other by the thickness of the separator 213.

The plurality of second tabs 215 may be provided on each second electrode 212. For example, a pair of second tabs 215 may be formed on each second electrode 212. The pair of second tabs 215 formed on each second electrode 212 may be arranged along the third direction.

The case 220 may form a general exterior of the battery cell 200 and may accommodate the electrode assembly 210. In an embodiment, the case 220 may include a conductive metal material, such as aluminum, an aluminum alloy, or nickel-plated steel.

The case 220 according to an embodiment may include a bottom portion 221, a first side portion 222, and a second side portion 223.

The bottom portion 221 may form an exterior of a lower side of the case 220. The bottom portion 221 according to an embodiment may have a rectangular plate shape. The bottom portion 221 may be disposed to face a bottom surface of the housing body 110. The bottom portion 221 may be disposed to face the bottom surface of the housing body 110 along the third direction.

The first side portion 222 may extend from the bottom portion 221 and form a portion of an exterior of a side surface of the case 220.

The first side portion 222 according to an embodiment may have a rectangular plate shape extending from the bottom portion 221 in a direction parallel to the third direction. The first side portion 222 may be disposed perpendicular to the second direction. A lower end portion of the first side portion 222 may be connected to an edge of the bottom portion 221 disposed parallel to the first direction. An upper end portion of the first side portion 222 may be disposed to face the housing cover 120. The upper end portion of the first side portion 222 may be disposed to face the housing cover 120 along the third direction.

A pair of first side portions 222 may be provided. The pair of first side portions 222 may be disposed spaced apart at a certain interval and may face each other along the second direction. The pair of first side portions 222 may be disposed parallel to each other.

The second side portion 223 may extend from the bottom portion 221 and may form a remaining portion of the exterior of the side surface of the case 220.

The second side portion 223 according to an embodiment may have a rectangular plate shape extending from the bottom portion 221 in the direction parallel to the third direction. The second side portion 223 may be disposed to intersect the first side portion 222. For example, the second side portion 223 may be disposed perpendicular to the first direction.

A lower end portion of the second side portion 223 may be connected to an edge of the bottom portion 221 disposed parallel to the second direction. An upper end portion of the second side portion 223 may be disposed to face the housing cover 120. The upper end portion of the second side portion 223 may be disposed to face the housing cover 120 along the third direction.

An area of the second side portion 223 may be larger than an area of the first side portion 222.

A pair of second side portions 223 may be provided. The pair of second side portions 223 may be disposed spaced apart at a certain interval and may face each other along the first direction. The pair of second side portions 223 may be disposed parallel to each other.

Accordingly, the case 220 according to an embodiment may have a rectangular parallelepiped shape having an open upper end portion facing the housing cover 120.

The cap plate 230 may be coupled to the case 220 and may seal the case 220.

The cap plate 230 according to an embodiment may be formed to have a flat plate shape. The cap plate 230 may be disposed to face the case 220 along the third direction. For example, an inner side surface of the cap plate 230 may be disposed to face the open upper side surface of the case 220. An outer side surface of the cap plate 230 may be disposed to face an inner side surface of the housing cover 120. The cap plate 230 may be disposed parallel to the bottom portion 221 of the case 220 and the housing cover 120.

In an embodiment, the cap plate 230 may be seated on upper end portions of the second side portion 223 and the first side portion 222. In an embodiment, the cap plate 230 may be inserted into the case 220 and a peripheral surface thereof may be in contact with inner side surfaces of the second side portion 223 and the first side portion 222. The cap plate 230 may be coupled to the upper end portions of the second side portion 223 and the first side portion 222 by any of various types of coupling methods, such as welding, bolting, fitting, and the like.

The terminal 240 may be coupled to the cap plate 230 and may protrude outward from the cap plate 230. The terminal 240 may be electrically connected to the electrode assembly 210.

The terminal 240 according to an embodiment may pass through the cap plate 230 along the third direction. An upper end portion of the terminal 240 may protrude outward from the cap plate 230, and a lower end portion of the terminal 240 may protrude into the case 220. A specific shape of the terminal 240 is not limited to the shape shown in FIGS. 2 to 3 and may be varied to have any of various shapes.

The terminal 240 may be formed of an electrically conductive material, such as aluminum, nickel, copper, or the like.

A pair of terminals 240 may be provided. The pair of terminals 240 may be disposed spaced apart from each other at a certain interval on the cap plate 230 along the second direction.

The pair of terminals 240 may be individually connected to the first electrode 211 and the second electrode 212 of the electrode assembly 210. Accordingly, the pair of terminals 240 may respectively function as a positive electrode terminal and a negative electrode terminal of the battery cell 200.

For example, any one terminal 240 of the pair of terminals 240 may be connected to the first tab 214. In an embodiment, any one of the pair of terminals 240 may be indirectly connected to the first tab 214 through a current collector 241 welded to the first tab 214. In an embodiment, the terminal 240 may be directly connected to the first tab 214.

Further, the other terminal 240 of the pair of terminals 240 may be connected to the second tab 215. In an embodiment, the other terminal 240 of the pair of terminals 240 may be indirectly connected to the second tab 215 through a current collector 241 welded to the second tab 215. In an embodiment, the terminal 240 may be directly connected to the second tab 215.

In an embodiment, an insulator G may be installed between the electrode assembly 210 and the cap plate 230. A pair of insulators G may be provided. The pair of insulators G may be spaced apart from each other between the electrode assembly 210 and the cap plate 230 along the second direction. The pair of insulators G may be disposed to individually surround different terminals 240. The insulator G may be formed of an insulating material, such as polyethylene (PE), polypropylene (PP), polyethylene terephthalate (PET), rubber, or the like.

The vent 250 may be installed in the cap plate 230 and may be opened and closed in response to a change in internal pressure of the case 220. The vent 250 may provide a discharge path for gas, flames, smoke, or the like generated in the case 220 if the internal pressure of the case 220 rises above a certain pressure, (e.g., a set pressure) due to overcurrent, thermal runaway, or the like. The vent 250 may be disposed between the pair of terminals. A longitudinal direction of the vent 250 described below may refer to a direction parallel to the second direction, and a width direction of the vent 250 may refer to a direction parallel to the first direction.

The vent 250 may be disposed spaced apart from the terminal 240 along the second direction. For example, the vent 250 may be disposed between the pair of terminals 240 facing along the second direction.

In an embodiment, the vent 250 may include a vent hole 251 and a vent plate 252.

The vent hole 251 may be formed to have a hole shape passing through the cap plate 230 along the third direction. A lower side of the vent hole 251 may be connected to an inner space of the case 220. An upper side of the vent hole 251 may be connected to the space outside the cap plate 230. A cross-sectional shape of the vent hole 251 may have any of various shapes, such as an oval shape, a circular shape, a polygonal shape, and the like.

The vent plate 252 may be opened and closed in response to a change in internal pressure of the case 220. That is, the vent plate 252 may maintain a closed state during normal operation of the battery cell 200 to seal the case 220. The vent plate 252 may be opened as the internal pressure of the case 220 rises above a certain pressure (e.g., a set pressure) due to overcharging of the battery cell 200, the occurrence of fire, or the like, and may discharge flames, gas, smoke, and the like generated inside the case 220 to the outside of the case 220.

The vent plate 252 according to an embodiment may be formed to have a flat plate shape. The vent plate 252 may be disposed to face the vent hole 251 along the third direction. In an embodiment, a thickness of the vent plate 252 may be smaller than a thickness of the cap plate 230. An upper surface of the vent plate 252 may be coupled to a lower surface of the cap plate 230 by any of various types of coupling methods, such as welding, bolting, fitting, and the like. In an embodiment, the vent plate 252 may be inserted into the vent hole 251, and a peripheral surface of the vent plate 252 may be coupled to an inner side surface of the vent hole 251.

In an embodiment, a vent notch 253 may be formed in the vent plate 252 to induce a rupture operation of the vent plate 252. The vent notch 253 according to an embodiment may have a groove shape concavely recessed toward the inside of the vent plate 252 from an outer side surface of the vent plate 252. However, a shape of the vent notch 253 is not limited to the shape shown in FIG. 3 and may be formed to have any of various patterns on the vent plate 252.

The cell bus bar 300 may be connected to the battery cell 200. The cell bus bar 300 may function to electrically interconnect a plurality of battery cells 200. The cell bus bar 300 may be formed of an electrically conductive material, such as copper, nickel, aluminum, or the like.

The cell bus bar 300 may be disposed between the battery cell 200 and the housing cover 120. The cell bus bar 300 may be disposed to face the terminal 240 of the battery cell 200 along the third direction between the battery cell 200 and the housing cover 120.

A plurality of cell bus bars 300 may be provided. The plurality of cell bus bars 300 may connect the plurality of battery cells 200 in series, parallel, or a combination of series and parallel. For example, each of the cell bus bars 300 may be connected to a terminal 240 which functions as a positive electrode in one of neighboring battery cells 200 disposed along the first direction, and a terminal 240 which functions as a negative electrode in another of the neighboring battery cells 200. The cell bus bar 300 may be mechanically and electrically connected to the terminal 240 by laser welding or the like.

However, a specific shape and arrangement of the cell bus bar 300 are not limited to those shown in FIGS. 1 and 2 and may be designed to have any of various shapes and arrangements.

The holder 400 may be disposed on the battery cell 200 and may support the cell bus bar 300.

The holder 400 according to an embodiment may be disposed between the battery cell 200 and the housing cover 120. The holder 400 may be formed of an insulating material, such as polyethylene (PE), polypropylene (PP), polyethylene terephthalate (PET), or the like to secure insulation for the battery cell 200.

The holder 400 may include a first holder surface 401 and a second holder surface 402 which are opposite to each other.

In an embodiment, the first holder surface 401 and the second holder surface 402 may be disposed perpendicular to the third direction. The first holder surface 401 may be a lower surface of the holder 400 facing the battery cell 200, and the second holder surface 402 may be an upper surface of the holder 400 facing the housing cover 120.

The holder 400 according to an embodiment may include a holder vent 410.

The holder vent 410 according to an embodiment may have a hole shape passing through a center region of the holder 400 facing the vent 250 of the battery cell 200 along the third direction. In an embodiment, an area of the holder vent 410 may be larger than an area of the vent 250.

A plurality of holder vents 410 may be provided. The plurality of holder vents 410 may be arranged at a certain interval along the first direction. In an embodiment, the number of holder vents 410 may be the same as the number of battery cells 200, and each of the holder vents 410 may be disposed to individually face the vents 250 of different battery cells 200.

The holder 400 according to an embodiment may include a support hole 420.

The support hole 420 may provide a space in which the cell bus bar 300 is accommodated in the holder 400.

The support hole 420 according to an embodiment may have a hole shape passing through the holder 400 along the third direction. The support hole 420 may be disposed to face the terminal 240 of the battery cell 200. The support hole 420 and the holder vent 410 may be disposed spaced apart from each other at a certain interval along the second direction.

A plurality of support holes 420 may be provided. The plurality of support holes 420 may be disposed in two rows along the second direction with the holder vents 410 therebetween. The plurality of support holes 420 disposed in each row may be arranged at a certain interval along the first direction. Each of the cell bus bars 300 may be inserted into different support holes 420. The cell bus bar 300 may be supported in the support holes 420 by any of various methods, such as fitting, simple contact, bolting, welding, and the like with the holder 400.

The module bus bar 500 may be connected to the cell bus bar 300. The module bus bar 500 may provide an electrical connection between different cell modules or an electrical connection between a battery module and an external electronic device. The module bus bar 500 may be formed of an electrically conductive material, such as copper, nickel, aluminum, or the like.

The module bus bar 500 may include an extending portion 510 and a connection portion 520.

The extending portion 510 may form an exterior of a side of the module bus bar 500 and may be disposed on the holder 400.

The extending portion 510 according to an embodiment may extend along the first direction. That is, a longitudinal direction of the extending portion 510 may be disposed parallel to the first direction, and a width of the extending portion 510 may be disposed parallel to the second direction.

The extending portion 510 may include a first surface 501 disposed facing the second holder surface 402 of the holder 400, and a second surface 502 opposite to the first surface 501. The first surface 501 may be disposed parallel to the second holder surface 402. The first surface 501 and the second surface 502 may be disposed parallel to each other.

The extending portion 510 may be disposed between the holder vent 410 and the support hole 420. The width of the extending portion 510 parallel to the second direction may be smaller than an interval between the holder vent 410 and the support hole 420. Accordingly, the extending portion 510 may not interfere with the holder vent 410 and the support hole 420.

An end portion of the extending portion 510 may be connected to any cell bus bar 300 of the plurality of cell bus bars 300. The end portion of the extending portion 510 may be connected to the cell bus bar 300 by any of various types of coupling methods, such as laser welding, ultrasonic welding, bolting, and the like.

The connection portion 520 may be connected to the extending portion 510 and may form an exterior of another side of the module bus bar 500. The connection portion 520 may be disposed outside the holder 400. The connection portion 520 according to an embodiment may be a remaining region of the module bus bar 500 not directly facing the holder 400 and disposed outside the holder 400. The connection portion 520 may be connected to an external electronic device or the module bus bar 500 of another battery module by any of various coupling methods, such as welding, bolting, and the like. However, a shape of the connection portion 520 is not limited to the shape shown in FIG. 2 and may have any of various shapes.

The adhesive member 600 may fix the extending portion 510 to the holder 400. That is, the adhesive member 600 may fix a relative position of the module bus bar 500 with respect to the holder 400. Accordingly, the adhesive member 600 may prevent or substantially prevent separation of the module bus bar 500, such as due to overpressure during thermal runaway of the battery cell 200, and prevent or substantially prevent a short circuit between the module bus bar 500 and the housing cover 120. In an embodiment, the adhesive member 600 may include a resin material having adhesive strength such as epoxy, urethane, polyurethane, or the like.

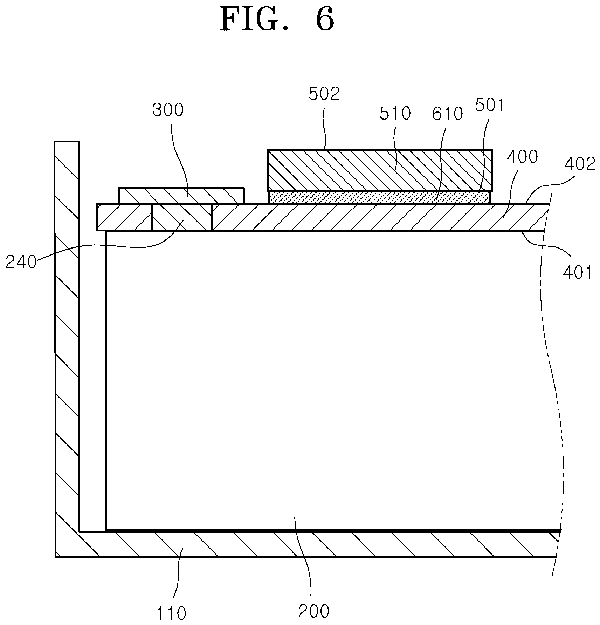

FIG. 6 is a view schematically showing a configuration of an adhesive member of the battery module of FIG. 1;

Referring to FIGS. 1 to 6, the adhesive member 600 according to an embodiment may include a first adhesive member 610.

The first adhesive member 610 may be disposed between the holder 400 and the extending portion 510.

The first adhesive member 610 according to an embodiment may be applied on the second holder surface 402 of the holder 400. The first adhesive member 610 may be disposed between the holder vent 410 and the support hole 420. The first adhesive member 610 may be applied on the second holder surface 402 in a liquid state. A plurality of first adhesive members 610 may be provided. In an embodiment, the plurality of first adhesive members 610 may be arranged in a plurality of rows along the first direction and the second direction on the second holder surface 402.

As the extending portion 510 is seated on the second holder surface 402, the first surface 501 of the extending portion 510 may be in contact with the first adhesive member 610. In this process, the plurality of first adhesive members 610 arranged in a plurality of rows along the first direction and the second direction on the second holder surface 402 may spread and may be interconnected along the first direction and the second direction by a pressing force between the extending portion 510 and the holder 400. Accordingly, in an embodiment, the first adhesive member 610 may secure a bonding force between the extending portion 510 and the holder 400 over an entire area of the extending portion 510.

Thereafter, the first adhesive member 610 is hardened into a solid state and may firmly fix the holder 400 and the extending portion 510.

Herein, a battery module according to another embodiment of the present disclosure will be described.

The battery module according to another embodiment may differ from the battery module of FIG. 1 in terms of the configuration of a holder 400 and an adhesive member 600.

Accordingly, in the description of the battery module according to the present embodiment, only the detailed configuration of the holder 400 and the adhesive member 600 which are different from the battery module of FIG. 1 will be described.

The description of the battery module of FIG. 1 may be applied as is to the remaining configurations of the battery module according to the present embodiment.

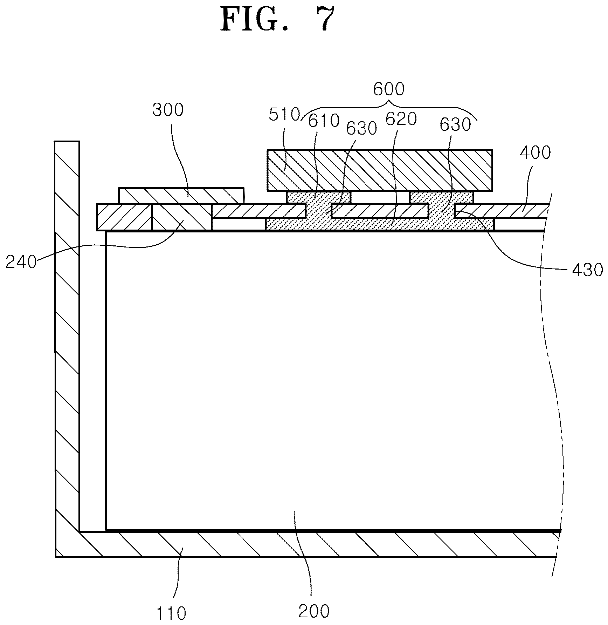

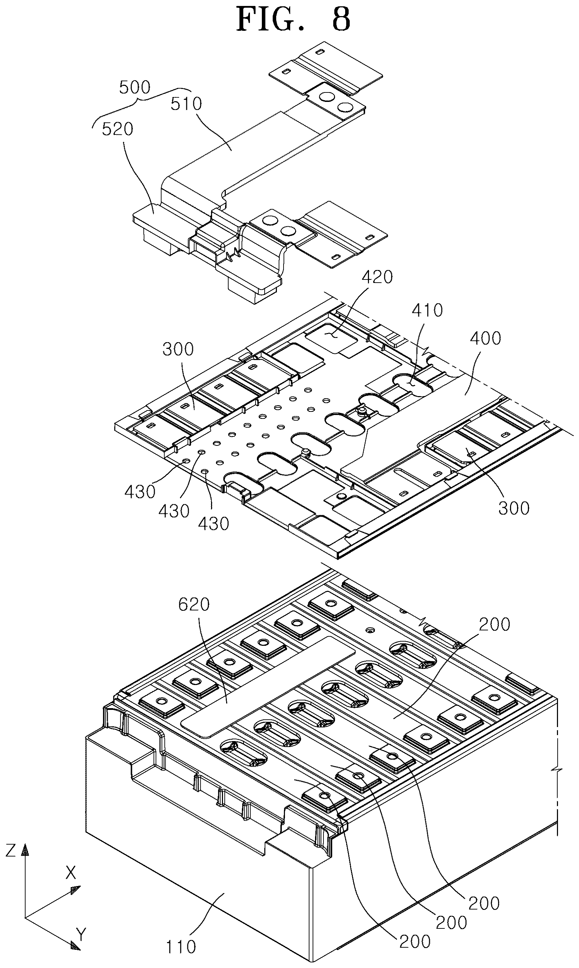

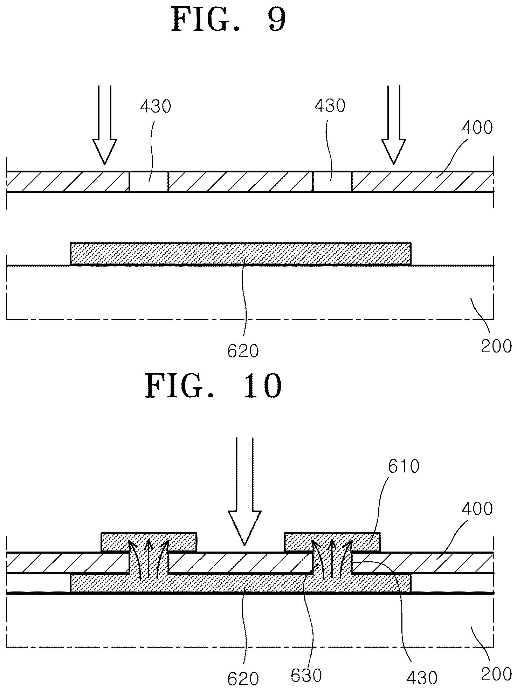

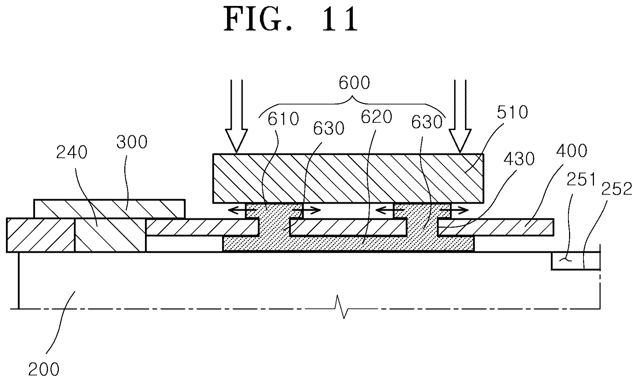

FIG. 7 is a cross-sectional view schematically showing a configuration of a battery module according to another embodiment of the present disclosure; FIG. 8 is an exploded perspective view schematically showing the configuration of the battery module of FIG. 7; and FIGS. 9 to 11 are views schematically showing a process of forming an adhesive member of the battery module of FIG. 7.

Referring to FIGS. 7 to 11, the adhesive member 600 according to the present embodiment may further include a second adhesive member 620 and a connecting portion 630.

The second adhesive member 620 may be disposed between a battery cell 200 and the holder 400.

The second adhesive member 620 according to an embodiment may be applied on a cap plate 230 of the battery cell 200. The second adhesive member 620 may be applied on the cap plate 230 in a liquid state. The second adhesive member 620 may be disposed between a vent 250 and a terminal 240.

A longitudinal direction of the second adhesive member 620 may be disposed parallel to the first direction, and a width direction of the second adhesive member 620 may be disposed parallel to the second direction. A length of the second adhesive member 620 may be greater than a width of the cap plate 230 parallel to the first direction. Accordingly, the second adhesive member 620 may be disposed on the cap plate 230 of a plurality of battery cells 200 arranged along the first direction. The length of the second adhesive member 620 may be smaller than a length of the extending portion 510. A width of the second adhesive member 620 may be smaller than an interval between the vent 250 and the terminal 240. Accordingly, the second adhesive member 620 may not be in direct contact with the vent 250 and the terminal 240.

The connecting portion 630 may be disposed between a first adhesive member 610 and the second adhesive member 620. The connecting portion 630 may interconnect the first adhesive member 610 and the second adhesive member 620.

The connecting portion 630 according to an embodiment may be disposed in a holder adhesive hole 430 formed through the holder 400.

For example, the holder adhesive hole 430 may have a hole shape passing through the holder 400 along the third direction. The holder adhesive hole 430 may be disposed between the battery cell 200 and the extending portion 510. That is, upper and lower end portions of the holder adhesive hole 430 may be disposed to face the extending portion 510 and the battery cell 200, respectively.

The holder adhesive hole 430 may be disposed between a holder vent 410 and a support hole 420. A plurality of holder adhesive holes 430 may be provided. The plurality of holder adhesive holes 430 may be arranged in a plurality of rows along the first direction and the second direction between the holder vent 410 and the support hole 420. However, an arrangement of the plurality of holder adhesive holes 430 may be varied in various ways within a range in which the upper end portion of the holder adhesive hole 430 is disposed to face the extending portion 510.

The connecting portion 630 may extend from the second adhesive member 620 toward the holder adhesive hole 430. For example, as the holder 400 is pressed toward the battery cell 200, a portion of the second adhesive member 620 applied on the battery cell 200 may be introduced, or configured to be introduced, into the holder adhesive hole 430 by a pressure which acts between the holder 400 and the battery cell 200, and may form the connecting portion 630. That is, in an embodiment, the connecting portion 630 may be a portion of the second adhesive member 620 introduced into the holder adhesive hole 430.

A plurality of connecting portions 630 may be provided. Each of the connecting portions 630 may be individually disposed in different holder adhesive holes 430.

In an embodiment, as the holder 400 is pressed toward the battery cell 200, the first adhesive member 610 may be introduced between the holder 400 and the extending portion 510, that is, onto the second holder surface 402 through the holder adhesive hole 430. In an embodiment, the first adhesive member 610 may be a portion of the connecting portion 630 which overflows onto the second holder surface 402 through the upper end portion of the holder adhesive hole 430. A cross-sectional area of the first adhesive member 610 may be larger than a cross-sectional area of the connecting portion 630.

A plurality of first adhesive members 610 may be individually connected to each connecting portion 630.

After the plurality of first adhesive members 610 are disposed on the second holder surface 402, the extending portion 510 may be seated on the second holder surface 402 and may be in contact with the first adhesive member 610. In this process, the plurality of first adhesive members 610 may spread and may be interconnected along the first direction and the second direction by the pressing force between the extending portion 510 and the holder 400.

Herein, a battery module according to another embodiment of the present disclosure will be described.

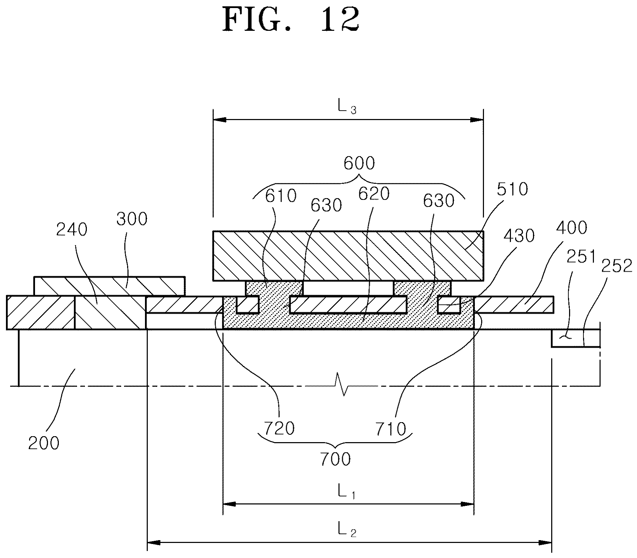

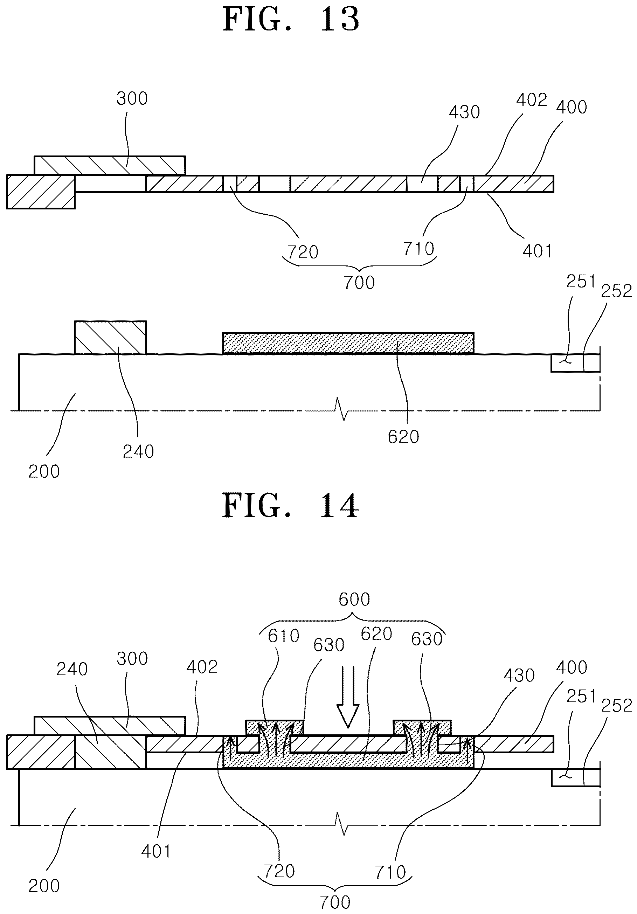

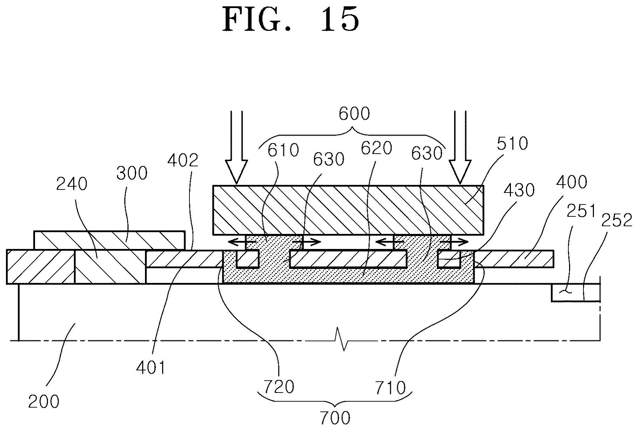

FIG. 12 is a cross-sectional view schematically showing a configuration of a battery module according to another embodiment of the present disclosure; and FIGS. 13 to 15 are views schematically showing a process of forming an adhesive member of the battery module of FIG. 12;

Referring to FIGS. 12 to 15, the battery module according to the present embodiment may further include a groove 700.

The battery pack according to the present embodiment may differ from the battery pack of the battery module of FIG. 7 only in that it further includes the groove 700.

Accordingly, in the description of the battery module according to the present embodiment, only the groove 700 that has not been described in the battery module of the battery module of FIG. 7 will be described.

The description of the battery module of FIG. 7 may be applied as is to the remaining configurations of the battery module according to the present embodiment.

The groove 700 may be spaced apart from a holder adhesive hole 430 and may be concavely formed from a first holder surface 401 toward a second holder surface 402. The groove 700 may block a second adhesive member 620 from being introduced into a terminal 240 or a vent 250 during a process in which a holder 400 is seated on a battery cell 200.

The groove 700 according to an embodiment may include a first groove 710 and a second groove 720.

The first groove 710 and the second groove 720 may be disposed on both, or opposite, sides of the holder adhesive hole 430. For example, the first groove 710 and the second groove 720 may be spaced apart at a certain interval along the second direction with the holder adhesive hole 430 therebetween.

An interval L₁ between the first groove 710 and the second groove 720 may be smaller than an interval L₂ between the terminal 240 and the vent 250. Accordingly, when the holder 400 is seated on the battery cell 200, an end region of the second adhesive member 620 which spreads toward the terminal 240 and the vent 250 may be introduced into the first groove 710 and the second groove 720 before being in contact with the terminals 240 and the vent 250.

The first groove 710 and the second groove 720 may pass through the second holder surface 402. In an embodiment, the first groove 710 and the second groove 720 may have hole shapes passing through the first holder surface 401 and the second holder surface 402 along the third direction. The interval L₁ between the first groove 710 and the second groove 720 may be smaller than a width L₃ of the extending portion 510 parallel to the second direction. Accordingly, in an embodiment, the end region of the second adhesive member 620 introduced into the first groove 710 and the second groove 720 may be transferred onto the second holder surface 402 through the first groove 710 and the second groove 720 and used as an adhesive means for fixing the extending portion 510 to the holder 400. However, the first groove 710 and the second groove 720 are not limited to these shapes and may have groove shapes not passing through the second holder surface 402.

Longitudinal directions of the first groove 710 and the second groove 720 may be disposed parallel to the first direction. The first groove 710 and the second groove 720 may have a straight line shape extending continuously along the first direction. In an embodiment, a plurality of first grooves 710 and a plurality of second grooves 720 are provided, and the plurality of first grooves 710 and the plurality of second grooves 720 may be arranged at a certain interval along the first direction.

Herein, a battery module according to another embodiment of the present disclosure will be described.

The battery module according to the present embodiment may differ from the battery module of the battery module of FIG. 7 only in terms of the configuration of a module bus bar 500 and an adhesive member 600.

Accordingly, in the description of the battery module according to the present embodiment, only the detailed configuration of the module bus bar 500 and the adhesive member 600 which are different from the battery module according to the of the battery module of FIG. 7 will be described.

The description of the battery module of FIG. 7 may be applied as is to the remaining configurations of the battery module according to the present embodiment.

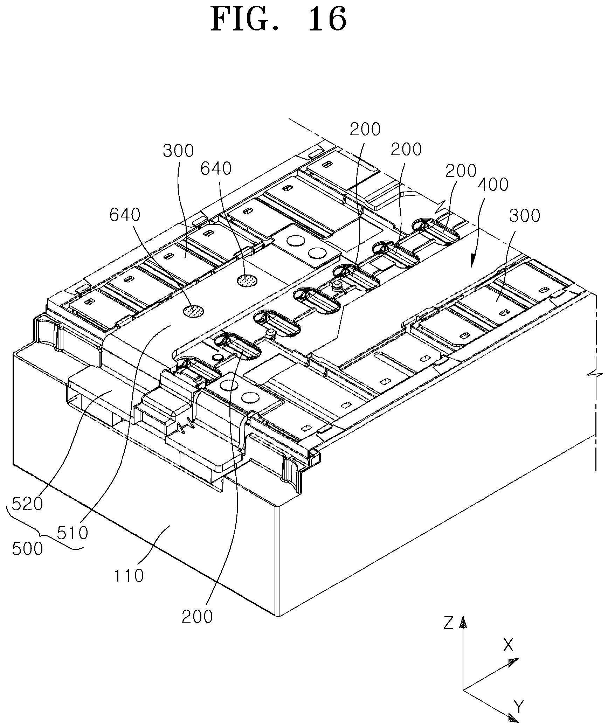

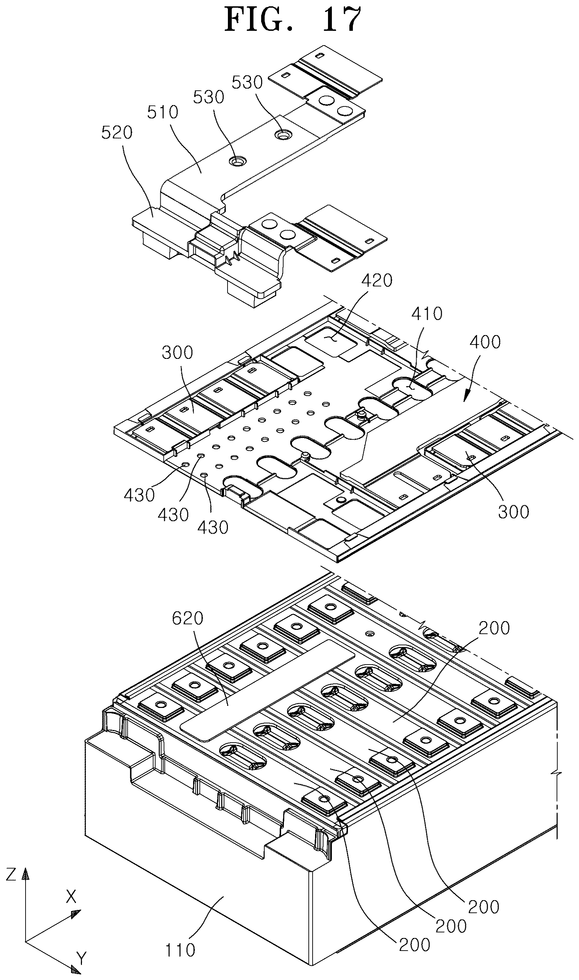

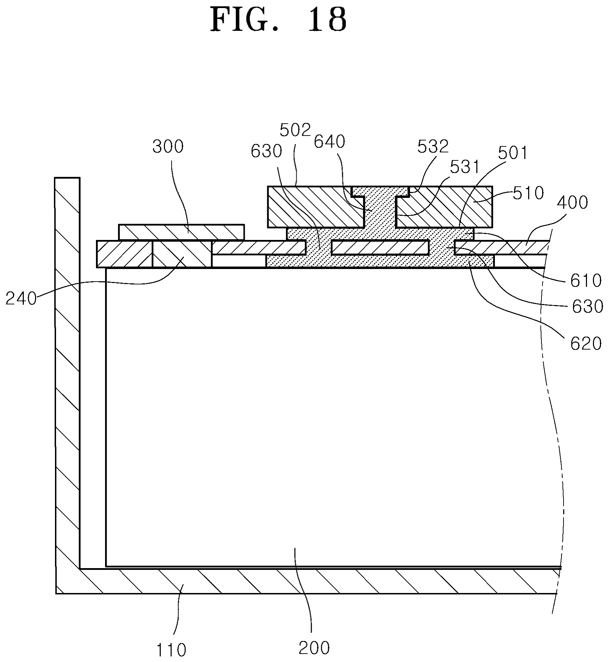

FIG. 16 is a perspective view schematically showing a configuration of the battery module according to another embodiment of the present disclosure; FIG. 17 is an exploded perspective view schematically showing the configuration of the battery module of FIG. 16; and FIG. 18 is a cross-sectional view schematically showing the configuration of the battery module of FIG. 16.

Referring to FIGS. 16 to 18, the module bus bar 500 according to the present embodiment may further include a bus bar adhesive hole 530 passing through an extending portion 510.

In an embodiment, the bus bar adhesive hole 530 may have a hole shape passing through a center of the extending portion 510 along the third direction. A plurality of bus bar adhesive holes 530 may be provided. The plurality of bus bar adhesive holes 530 may be disposed spaced apart from each other in the extending portion 510. The plurality of bus bar adhesive holes 530 may be arranged at a certain interval along the first direction. However, the number of bus bar adhesive holes 530 is not limited to the number shown in FIG. 17 and may have any of various numbers.

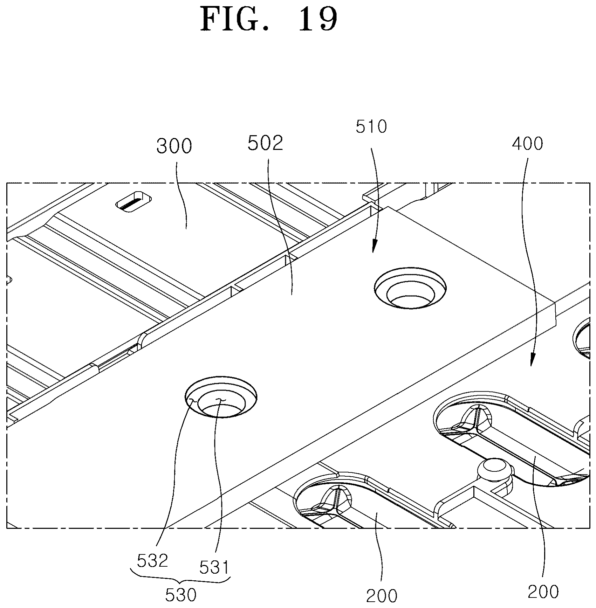

FIG. 19 is an enlarged view schematically showing a configuration of the bus bar adhesive hole of the battery module of FIG. 16.

Referring to FIGS. 16 to 19, the bus bar adhesive hole 530 according to an embodiment may include a first through portion 531 and a second through portion 532.

The first through portion 531 may be a lower end region of the bus bar adhesive hole 530 passing through a first surface 501 of the extending portion 510 among an entire region of the bus bar adhesive hole 530.

The second through portion 532 may be an upper end region of the bus bar adhesive hole 530 passing through a second surface 502 of the extending portion 510 and connected to the first through portion 531 among an entire region of the bus bar adhesive hole 530.

The adhesive member 600 according to an embodiment may further include a third adhesive member 640.

The third adhesive member 640 may extend from the first adhesive member 610 and may be disposed in the bus bar adhesive hole 530. The third adhesive member 640 may function as a configuration which strengthens a coupling force between a holder 400 and the extending portion 510 in the bus bar adhesive hole 530.

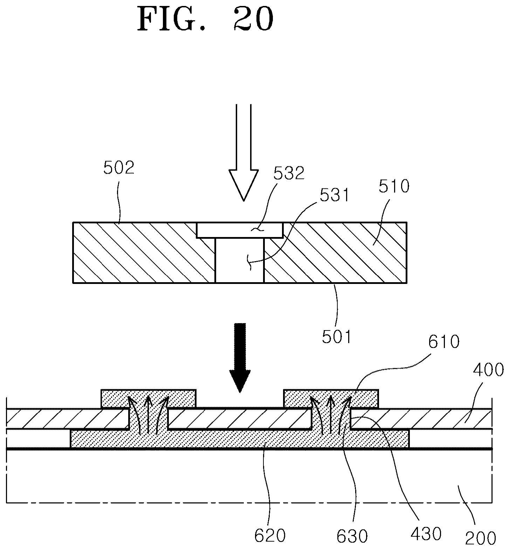

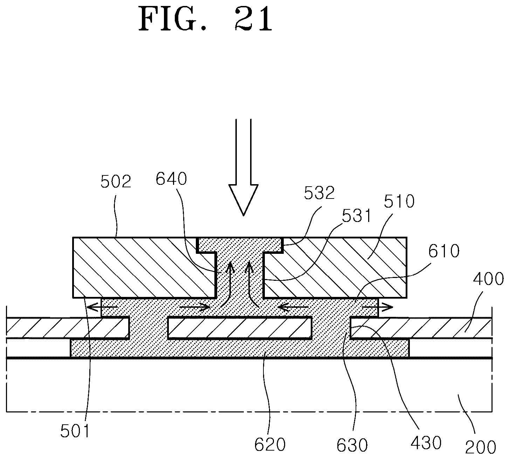

FIGS. 20 and 21 are views schematically showing a process of forming the third adhesive member of the battery module of FIG. 16.

Referring to FIGS. 16 to 21, as the extending portion 510 is pressed toward the holder 400, a portion of the first adhesive member 610 transferred onto a second holder surface 402 through the holder adhesive hole 430 may be introduced into the bus bar adhesive hole 530 by a pressure which acts between the extending portion 510 and the holder 400, and may form the third adhesive member 640. In an embodiment, the third adhesive member 640 may be a portion of the first adhesive member 610 introduced into the bus bar adhesive hole 530.

The bus bar adhesive holes 530 may be disposed to be offset from the holder adhesive holes 430. That is, the bus bar adhesive holes 530 and the holder adhesive holes 430 may be disposed so as not to face each other along the third direction. Accordingly, the first adhesive member 610 transferred onto the second holder surface 402 may not be immediately introduced into the bus bar adhesive hole 530 and may be introduced into the bus bar adhesive hole 530 after sufficiently securing a contact area with the second holder surface 402 and the first surface 501.

In an embodiment, a cross-sectional area of the second through portion 532 may be larger than a cross-sectional area of the first through portion 531. Accordingly, an upper end portion of the third adhesive member 640 introduced into the bus bar adhesive hole 530 may be located in the bus bar adhesive hole 530 without overflowing onto the second surface 502 of the extending portion 510.

Herein, a battery module according to another embodiment of the present disclosure will be described.

The battery module according to the present embodiment may differ from the battery module of FIG. 16 only in terms of the configuration of a bus bar adhesive hole 530 and a third adhesive member 640.

Accordingly, in the description of the battery module according to the present embodiment, only the detailed configuration of the bus bar adhesive hole 530 and the third adhesive member 640 which are different from the battery module of FIG. 16 will be described.

The description of the battery module of FIG. 16 may be applied as is to the remaining configurations of the battery module according to the present embodiment.

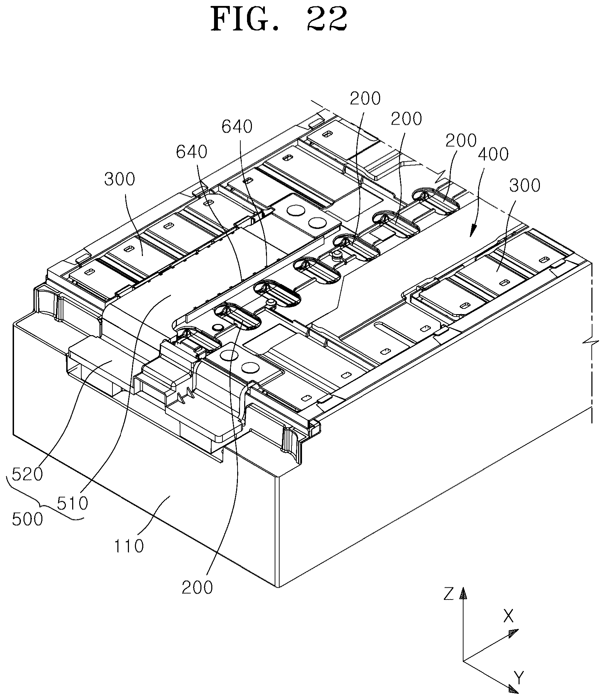

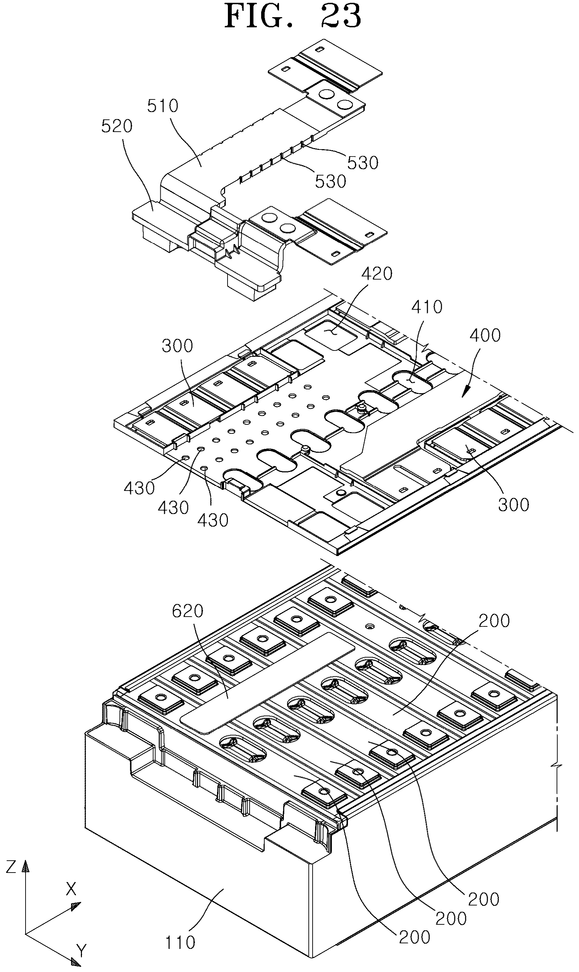

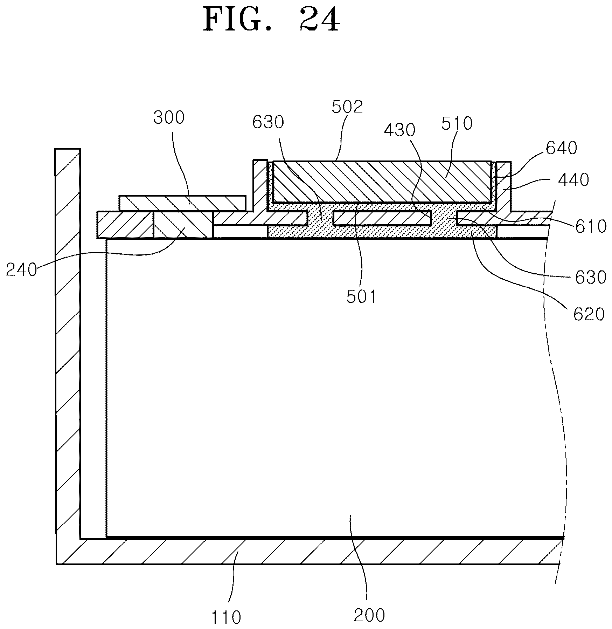

FIG. 22 is a perspective view schematically showing a configuration of a battery module according to another embodiment of the present disclosure; FIG. 23 is an exploded perspective view schematically showing the configuration of the battery module of FIG. 22; and FIG. 24 is a cross-sectional view schematically showing the configuration of the battery module of FIG. 22.

Referring to FIGS. 22 to 24, the bus bar adhesive hole 530 according to an embodiment may be formed concavely from a side surface of an extending portion 510. Upper and lower end portions of the bus bar adhesive hole 530 may pass through a first surface 501 and a second surface 502 of the extending portion 510, respectively.

A plurality of bus bar adhesive holes 530 may be provided. In an embodiment, the plurality of bus bar adhesive holes 530 may be symmetrically disposed on both, or opposite, sides of the extending portion 510 perpendicular to the second direction. The plurality of bus bar adhesive holes 530 disposed on any side of the extending portion 510 may be arranged at a certain interval along the first direction.

The battery module according to an embodiment may further include a rib 440.

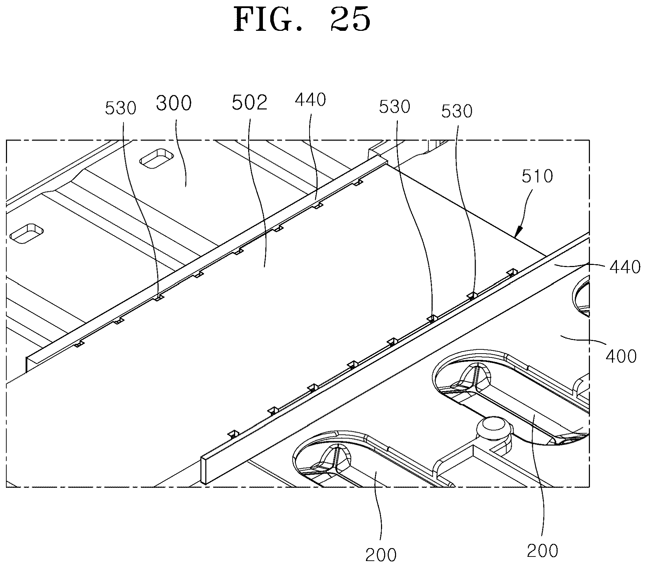

FIG. 25 is an enlarged view schematically showing a configuration of a rib of the battery module of FIG. 22.

Referring to FIGS. 22 to 25, the rib 440 according to an embodiment may have a partition wall form extending from a second holder surface 402 of a holder 400. The rib 440 may be disposed to face the side surface of the extending portion 510 along the second direction. The rib 440 may be in contact with the side surface of the extending portion 510.

A pair of ribs 440 may be provided. The pair of ribs 440 may be disposed to face both side surfaces of the extending portion 510 perpendicular to the second direction, respectively.

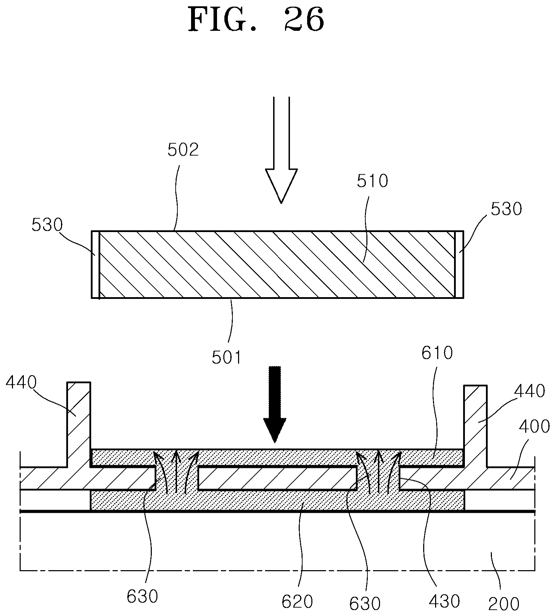

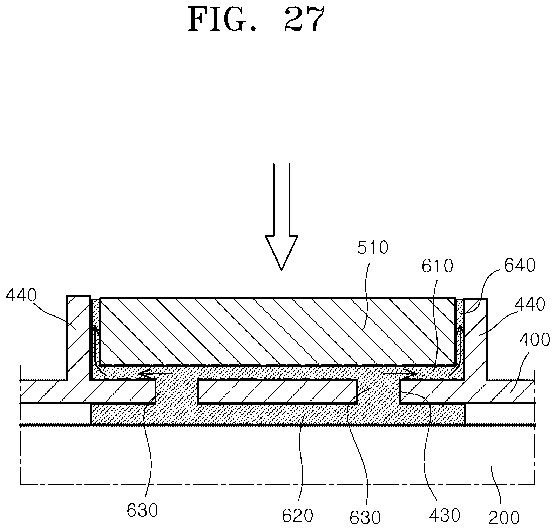

FIGS. 26 and 27 are views schematically showing a process of forming a third adhesive member of the battery module of FIG. 22.

Referring to FIGS. 22 to 27, as the extending portion 510 is pressed toward the holder 400, a portion of the first adhesive member 610 transferred onto the second holder surface 402 through a holder adhesive hole 430 may be introduced into the bus bar adhesive hole 530 by a pressure which acts between the extending portion 510 and the holder 400, and may form the third adhesive member 640.

As the rib 440 is in contact with the side surface of the extending portion 510, a portion of the first adhesive member 610 may fix the extending portion 510 to the rib 440 in the bus bar adhesive hole 530 without being separated from the bus bar adhesive hole 530.

The description of the battery module of FIG. 7 may be applied as is to the remaining configurations of the battery module according to the present embodiment.

According to one or more embodiments of the present disclosure, separation of a module bus bar due to overpressure which may occur during thermal runaway of a battery cell can be prevented or substantially prevented, and a short circuit between the module bus bar and a housing can be prevented or substantially prevented.

However, aspects and effects obtainable through the present disclosure are not limited to the above aspects and effects, and other technical aspects and effects that are not mentioned will be clearly understood by those skilled in the art from the description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

## Claims

1. A battery module comprising:
a housing;
a plurality of battery cells arranged in the housing along a first direction;
a plurality of cell bus bars connected to the battery cells;
a holder arranged on the battery cells and supporting the cell bus bars;
a module bus bar comprising an extending portion connected to the cell bus bars and arranged on the holder; and
an adhesive member fixing the extending portion to the holder.

2. The battery module as claimed in claim 1, wherein the adhesive member comprises a first adhesive member between the holder and the extending portion.

3. The battery module as claimed in claim 2, wherein the holder comprises a holder adhesive hole between the battery cell and the extending portion, and
the adhesive member further comprises: a second adhesive member between the battery cell and the holder; and a connecting portion in the holder adhesive hole and connected to the first adhesive member and the second adhesive member.

4. The battery module as claimed in claim 3, wherein the first adhesive member is configured to be introduced between the holder and the extending portion through the holder adhesive hole as the holder is pressed toward the battery cell.

5. The battery module as claimed in claim 3 or 4, wherein a cross-sectional area of the first adhesive member is larger than a cross-sectional area of the connecting portion.

6. The battery module as claimed in claim 3, 4 or 5, wherein the holder adhesive hole comprises a plurality of holder adhesive holes spaced apart from each other between the battery cells and the module bus bars.

7. The battery module as claimed in any one of claims 3 to 6, wherein a battery cell of the plurality of battery cells comprises:
a vent facing the holder; and
a terminal spaced apart from the vent and connected to a cell bus bar of the plurality of cell bus bars, and
the second adhesive member is between the vent and the terminal.

8. The battery module as claimed in claim 7, wherein the holder further comprises:
a first holder surface facing the battery cell;
a second holder surface opposite to the first holder surface; and
a groove spaced apart from the holder adhesive hole and concavely formed from the first holder surface toward the second holder surface.

9. The battery module as claimed in claim 8, wherein the vent and the terminal are spaced apart along a second direction intersecting the first direction, and
the groove comprises a first groove and a second groove spaced apart along the second direction and respectively located on opposite sides of the holder adhesive hole.

10. The battery module as claimed in claim 9, wherein the first groove and the second groove pass through the second holder surface, and an interval between the first groove and the second groove is smaller than a width of the extending portion parallel to the second direction.

11. The battery module as claimed in any one of claims 3 to 10, wherein the module bus bar comprises a bus bar adhesive hole passing through the extending portion, and
the adhesive member further comprises a third adhesive member extending from the first adhesive member and located in the bus bar adhesive hole.

12. The battery module as claimed in claim 11, wherein the bus bar adhesive hole comprises a plurality of bus bar adhesive holes spaced apart from each other in the extending portion.

13. The battery module as claimed in claim 11 or 12, wherein the extending portion comprises a first surface facing the holder and a second surface opposite to the first surface,
the bus bar adhesive hole comprises: a first through portion passing through the first surface; and a second through portion passing through the second surface and connected to the first through portion, and
a cross-sectional area of the second through portion is larger than a cross-sectional area of the first through portion.

14. The battery module as claimed in claim 11, 12 or 13, wherein the bus bar adhesive hole is concavely formed from a side surface of the extending portion.

15. The battery module as claimed in claim 14, further comprising a rib extending from the holder and facing the side surface of the extending portion.
